# EUROPEAN PATENT SPECIFICATION

(11) **EP 3 144 242 B1**
(45) Date of publication and mention of the grant of the patent: **10.07.2019**
(21) Application number: 14891803.0
(22) Date of filing: 16.10.2014
(51) Int. Cl.: B29C 41/04, B65D 43/06, B29C 39/10

(54) **CONVENIENT BARREL LID STRUCTURE AND POLYFOAM INJECTION PROCESS THEREFOR**
PRAKTISCHE TROMMELDECKELSTRUKTUR UND POLYSCHAUMSTOFFINJEKTIONSVERFAHREN DAFÜR
STRUCTURE DE COUVERCLE DE FÛT PRATIQUE ET PROCÉDÉ D'INJECTION DE MOUSSE POLYURÉTHANE POUR CETTE DERNIÈRE

(30) Priority: 16.05.2014 CN 201410206650
(43) Date of publication of application: 22.03.2017
(73) Proprietor: Suzhou Hycan Holdings Co., Ltd., Suzhou, Jiangsu 215236 (CN)
(72) Inventor: SHEN, Junjie, Suzhou Jiangsu 215236 (CN); ZHANG, Yejin, Suzhou Jiangsu 215236 (CN); HUANG, Xiaolin, Suzhou Jiangsu 215236 (CN)
(74) Representative: De Vries & Metman
(86) International application number: PCT/CN2014/088758
(87) International publication number: WO 2015/172509

(56) References cited:
- EP-A1- 0 781 234
- EP-A2- 0 233 722
- CA-A1- 2 333 473
- CN-A- 102 009 767
- CN-A- 102 009 767
- CN-A- 103 568 179
- CN-A- 104 003 058
- CN-U- 201 834 342
- CN-U- 202 911 055
- CN-U- 202 911 055
- CN-U- 203 127 274
- GB-A- 202 828
- JP-A- H0 584 846
- US-A- 4 650 387

## Description

### TECHNICAL FIELD OF THE INVENTION

The present invention relates to barrel and can manufacturing field, in particular to a barrel lid structure and an adhesive injection process thereof.

### BACKGROUND OF THE INVENTION

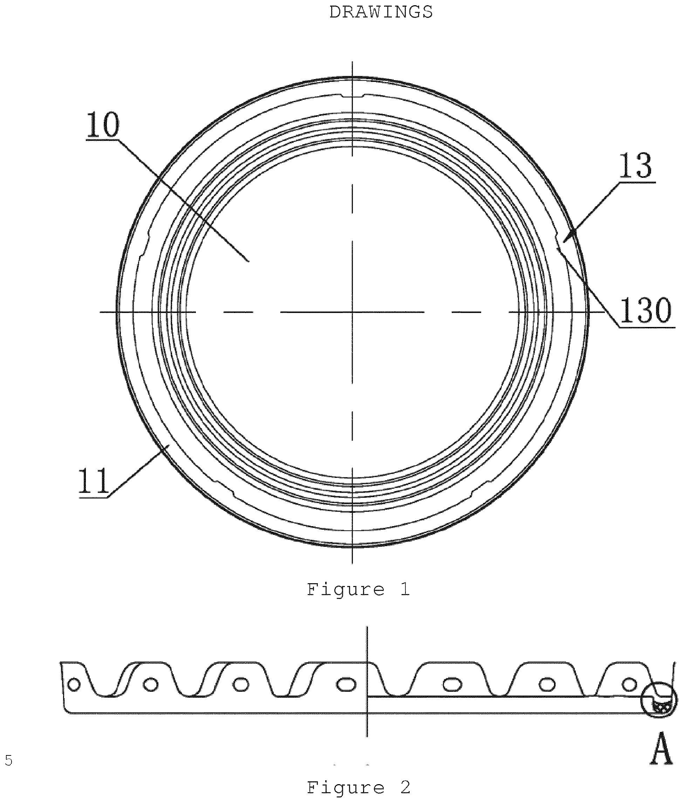

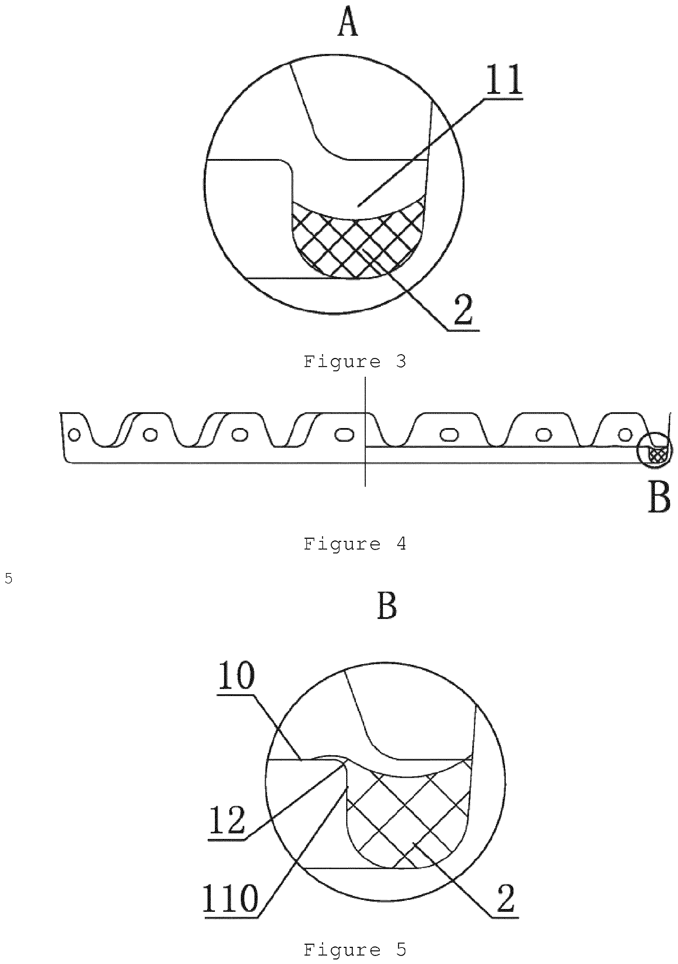

A barrel lid includes a lid cover with a curled edge at periphery, the curled edge forming a groove part, and the groove part accommodates an edge of the opening of the barrel body when the lid covered the barrel body. In the prior art, a circle of rubber strip or injected foaming adhesive is usually placed in the groove part to avoid direct contact between the barrel body and the lid, as shown in Figs 2 and 3. However, in actual use, the barrel body and a part of the periphery of the lid cover also contact, and thus the contact part is prone to be worn and rust during opening the lid, meanwhile the sealing is not very good.

EP0233722A2 discloses a jar (1) having its closure (2) sealingly applied by means of a downthrust to compress a gasket (3). The arrangement may be such that the closure (2) can be applied by simple downthrust, without the need for a twisting chuck.

CN103568179A and CN 202911055U disclose a jar cover, which is capable of realizing injection of a plurality of points of glue at the same time, is used for injection of a plurality of points of the cover sealing glue on the inner surface of a pre-heated cover in one time; and the cover sealing glue points are subjected to compression moulding using a molding press, so that an annular cover sealing glue layer is formed on the periphery of the inner surface of the cover.

### SUMMARY OF THE INVENTION

One purpose of the present invention is to provide a barrel lid structure.

To achieve the above mentioned purpose, the technical solutions employed by the present invention are:

a barrel lid structure, comprises a lid cover and a groove part, an edge part of the lid cover is connected to one side of the groove part, the groove part is filled with foaming adhesive, and the foaming adhesive covers the junction of the lid cover and the groove part and extends to the lid cover to cover part of the lid cover, a plurality of recess recessed towards the lid cover and facing the groove part is provided at the junction of the lid cover and the groove part.

Preferably, the lid cover and the groove part are connected via an arc surface.

Further preferably, the plurality of recess is evenly distributed at the junction of the lid cover and the groove part.

Preferably, a distance for which the foaming adhesive extends to the lid cover is 1% -10% of a width or diameter of the lid cover.

Another purpose of the present invention is to provide an adhesive injection process for a barrel lid structure.

To achieve the above mentioned purpose, the technical solutions employed by the present invention are:

an adhesive injection process for a convenient barrel lid structure comprises, injecting the foaming adhesive at the junction of the lid cover and the groove part serving as an adhesive injection point, throwing the foaming adhesive into the groove part by rotating the barrel lid, completing the adhesive injection when the groove part is fully filled and the foaming adhesive overflows from the junction of the lid cover and the groove part and extends to the lid cover to cover part of the lid cover, and solidifying the foaming adhesive.

Preferably, a plurality of recess recessed towards the lid cover and facing the groove part is provided at the junction of the lid cover and the groove part, the position of the adhesive injection point is provided at a bottom edge of the recess.

Due to the use of the above technical solutions, the present invention has the following advantages and effects over the prior art:

by covering the lid cover with the foaming adhesive, the present invention can completely prevent a direct contact between a barrel body and the lid cover, reduce frictions and rust of a barrel opening, and enhance the seal performance; the structure is simple, and the foaming adhesive injection is convenient.

### BRIEF DESCRIPTION OF THE DRAWINGS

Figure 1 is a view of a barrel lid;
Figure 2 is an adhesive injection schematic diagram of a barrel lid in the prior art;
Figure 3 is an enlarged view of part A in Figure 2;
Figure 4 is an adhesive injection schematic diagram of a barrel lid of the present invention;
Figure 5 is an enlarged view of part b in Figure 4.

Wherein: 10 - lid cover; 11 - groove part; 110 - side; 12 - arc surface; 13 - recess; 130 - bottom edge; 2 - foaming adhesive.

### DETAILED DESCRIPTION OF EXEMPLARY EMBODIMENTS

In the following, the present invention is described in detail combining with the accompanying drawings and embodiments.

A barrel lid structure shown in Figures 1 and 4, comprises a lid cover 10 and a groove part 11, an edge part of the lid cover 10 is connected to one side 110 of the groove part 11, and generally the lid cover 10 and the groove part 11 are connected via an arc surface 12 to achieve smooth connection.

As shown in Figure 5, the groove part 11 is filled with foaming adhesive 2, and the foaming adhesive 2 covers the arc surface 12 junction of the lid cover 10 and the groove part 11 and extends to the lid cover 10 for a distance to cover the lid cover 10, and the distance for which the foaming adhesive 2 extends to the lid cover 10 is 1% -10% of a width or diameter of the lid cover 10, to avoid too many foaming adhesive 2 covering the lid cover 10. In this way, when the barrel lid covers the barrel body, the foaming adhesive 2 can prevent a direct contact between the barrel body and the lid cover, reduce frictions and rust of the barrel opening, and enhance the seal performance.

Moreover, a plurality of recess 13 recessed towards the lid cover 10 and facing the groove part 11 is provided at the arc surface 12 junction of the lid cover 10 and the groove part 11. When a plurality of barrel is stacked together, a part of a barrel bottom lies on a barrel lid, and the upper barrel bottom may be positioned by means of these recesses 13 and avoid wobble; and when the barrel lids are stacked together, it is easy to be picked up due to the recesses 13, and overlapped lids are prevented.

An adhesive injection process of the foaming adhesive 2 of the present invention is introduced as follow:

Injecting the foaming adhesive 2 at the arc surface 12 junction of the lid cover 10 and the groove part 11 serving as an adhesive injection point, wherein the position of the adhesive injection point is provided at a bottom edge 130 of the recess 13; throwing the foaming adhesive 2 into the groove part 11 by rotating the barrel lid, completing the adhesive injection when the groove part 11 is fully filled, and the foaming adhesive overflows and covers the arc surface 12 junction of the lid cover 10 and the groove part 11 and extends to the lid cover 10 to cover the lid cover 10, and finally, solidifying the foaming adhesive 2 to complete the adhesive injection process. The foaming adhesive possesses a good adhesive property, and is not easy to peel off after being injected into the groove part.

The embodiments described above are only for illustrating the technical concepts and features of the present invention, and intended to make those skilled in the art being able to understand the present invention and thereby implement it, and should not be concluded to limit the protective scope of this invention.

## Claims

1. A barrel lid structure, comprising a lid cover (10) and a groove part (11), an edge part of the lid cover (10) being connected to one side (110) of the groove part (11), wherein the groove part (11) is filled with foaming adhesive (2), and the foaming adhesive (2) covers the junction of the lid cover (10) and the groove part (11) and extends to the lid cover (10) to cover part of the lid cover (10); **characterized in that** a plurality of recess (13) recessed towards the lid cover (10) and facing the groove part (11) is provided at the junction of the lid cover (10) and the groove part (11).

2. The barrel lid structure according to claim 1, wherein the lid cover (10) and the groove part (11) are connected via an arc surface (12).

3. The barrel lid structure according to claim 1, wherein the plurality of recess (13) is evenly distributed at the junction of the lid cover (10) and the groove part (11).

4. The barrel lid structure according to claim 1, wherein a distance for which the foaming adhesive (2) extends to the lid cover (10) is 1% -10% of a width or diameter of the lid cover (10).

5. An adhesive injection process for a barrel lid structure according to any one of the claims 1-4, wherein injecting the foaming adhesive (2) at the junction of the lid cover (10) and the groove part (11) serving as an adhesive injection point, and the position of the adhesive injection point is provided at a bottom edge (130) of the recess (13), throwing the foaming adhesive (2) into the groove part (11) by rotating the barrel lid, completing the adhesive injection when the groove part (11) is fully filled and the foaming adhesive overflows from the junction of the lid cover (10) and the groove part (11) and extends to the lid cover (10) to cover part of the lid cover (10), and solidifying the foaming adhesive (2).

## Patentansprüche

1. Fassdeckelstruktur mit einem Deckel (10) und einem Nutenabschnitt (11), wobei ein Randabschnitt des Deckels (10) mit einer Seite (110) des Nutenabschnitts (11) verbunden ist, wobei der Nutenabschnitt (11) mit einem Schaumklebstoff (2) gefüllt ist, und wobei der Schaumklebstoff (2) die Verbindungsstelle zwischen dem Deckel (10) und dem Nutenabschnitt (11) abdeckt und sich bis zum Deckel (10) erstreckt, um einen Teil des Deckels (10) abzudecken,
**dadurch gekennzeichnet, dass**
mehrere Vertiefungen (13), die in Richtung zum Deckel (10) vertieft und dem Nutenabschnitt (11) zugewandt sind, an der Verbindungsstelle zwischen dem Deckel (10) und dem Nutenabschnitt (11) ausgebildet sind.

2. Fassdeckelstruktur nach Anspruch 1, wobei der Deckel (10) und der Nutenabschnitt (11) über eine Bogenfläche (12) verbunden sind.

3. Fassdeckelstruktur nach Anspruch 1, wobei die mehreren Vertiefungen (13) an der Verbindungsstelle zwischen dem Deckel (10) und dem Nutenabschnitt (11) gleichmäßig verteilt sind.

4. Fassdeckelstruktur nach Anspruch 1, wobei eine Strecke, über die sich der Schaumklebstoff (2) zum Deckeldeckel (10) erstreckt, 1% bis 10% einer Breite oder eines Durchmessers des Deckels (10) beträgt.

5. Klebstoffeinspritzverfahren für eine Fassdeckelstruktur nach einem der Ansprüche 1 bis 4, mit den Schritten zum Einspritzen des Schaumklebstoffs (2) an der Verbindungsstelle zwischen dem Deckel (10) und dem Nutenabschnitt (11), die als eine Klebstoffeinspritzstelle dient, wobei die Position der Klebstoffeinspritzstelle sich an einer unteren Kante (130) der Vertiefung (13) befindet, Schleudern des Schaumklebstoff (2) in den Nutenabschnitt (11) durch Drehen des Fassdeckels, Abschließen des Klebstoffeinspritzvorgangs, wenn der Nutenabschnitt (11) vollständig gefüllt ist und der Schaumklebstoff von der Verbindungsstelle zwischen dem Deckel (10) und dem Nutenabschnitt (11) überläuft und sich zum Deckel (10) erstreckt, um einen Teil des Deckels (10) abzudecken, und Verfestigen des Schaumklebstoffs (2).

## Revendications

1. Structure de couvercle de fût, comprenant un couvercle (10) et une partie de gorge (11), une partie de bord du couvercle (10) étant raccordée à un côté (110) de la partie de gorge (11), dans laquelle la partie de gorge (11) est remplie d'adhésif expansible (2), et l'adhésif expansible (2) couvre la jonction du couvercle (10) et de la partie de gorge (11) et s'étend jusqu'au couvercle (10) pour couvrir une partie du couvercle (10) ;
**caractérisée en ce qu'**une pluralité d'évidements (13) en retrait vers le couvercle (10) et en regard de la partie de gorge (11) sont prévus au niveau de la jonction du couvercle (10) et de la partie de gorge (11).

2. Structure de couvercle de fût selon la revendication 1, dans laquelle le couvercle (10) et la partie de gorge (11) sont raccordés via une surface d'arc (12).

3. Structure de couvercle de fût selon la revendication 1, dans laquelle la pluralité d'évidements (13) est répartie de façon régulière au niveau de la jonction du couvercle (10) et de la partie de gorge (11).

4. Structure de couvercle de fût selon la revendication 1, dans laquelle une distance sur laquelle l'adhésif expansible (2) s'étend jusqu'au couvercle (10) est de 1 % à 10 % d'une largeur ou d'un diamètre du couvercle (10).

5. Procédé d'injection d'adhésif pour une structure de couvercle de fût selon l'une quelconque des revendications 1 à 4, dans lequel l'injection de l'adhésif expansible (2) au niveau de la jonction du couvercle (10) et de la partie de gorge (11) servant de point d'injection d'adhésif, et la position du point d'injection d'adhésif est prévue au niveau d'un bord inférieur (130) de l'évidement (13), la projection de l'adhésif expansible (2) dans la partie de gorge (11) par rotation du couvercle de fût, l'achèvement de l'injection d'adhésif lorsque la partie de gorge (11) est totalement remplie et l'adhésif expansible déborde de la jonction du couvercle (10) et de la partie de gorge (11) et s'étend jusqu'au couvercle (10) pour couvrir une partie du couvercle (10), et la solidification de l'adhésif expansible (2).
